# EUROPEAN PATENT APPLICATION

(11) **EP 4 439 371 A1**
(43) Date of publication of application: **02.10.2024**
(21) Application number: 22897445.7
(22) Date of filing: 17.10.2022
(51) Int. Cl.: G06F 30/20, G06F 113/14

(54) **SIMPLIFIED METHOD FOR OVERALL CRITICALITY SAFETY ANALYSIS OF PIPELINE EQUIPMENT ROOM**

(30) Priority: 23.11.2021 CN 202111394652
(71) Applicant: China Nuclear Power Engineering Co., Ltd., Beijing 100840 (CN)
(72) Inventor: CHEN, Tian, Beijing 100840 (CN); ZHANG, Yicheng, Beijing 100840 (CN); HU, Xiaoli, Beijing 100840 (CN); FEI, Juntian, Beijing 100840 (CN); YI, Xuan, Beijing 100840 (CN); SHAO, Zeng, Beijing 100840 (CN); YANG, Haifeng, Beijing 100840 (CN); YU, Miao, Beijing 100840 (CN)
(74) Representative: Cohausz & Florack
(86) International application number: PCT/CN2022/125580
(87) International publication number: WO 2023/093362

(57) **Abstract**

A simplified method for overall criticality safety analysis of a pipeline equipment room is provided, which relates to the technical field of criticality safety analysis, and includes the steps of: performing, according to a medium in pipelines, screening analysis on all pipelines in an equipment room to be analyzed to obtain pipelines containing a fissile material solution as effective pipelines, and calculating a total solution volume in all effective pipelines (S1); establishing a simplified pipeline bundle model, where all the pipelines in the simplified pipeline bundle model are tightly arranged according to a minimum arrangement spacing (S2); searching and calculating, by keeping the total feed solution volume of the pipeline bundle model unchanged, and by changing the number and height in the pipeline bundle models, a pipeline bundle size for realizing the maximum reactivity of the simplified pipeline bundle model (S3); and tightly contacting the simplified pipeline bundle model having the maximum reactivity next to an equipment having the maximum reactivity in the equipment room in a tight arrangement mode allowing maximum interaction (S4). This method is much simpler than the process of establishing pipelines one by one in a refined manner, thereby improving the calculation and analysis efficiency, and avoiding the problem that a calculation result exceeds a criticality safety receiving criterion due to overly conservative and simple gathering of a pipeline feed solution.

## Description

The present disclosure claims the priority of the Chinese application No. CN202111394652.4 titled "SIMPLIFIED METHOD FOR OVERALL CRITICALITY SAFETY ANALYSIS OF PIPELINE EQUIPMENT ROOM" filed on November 23, 2021.

### TECHNICAL FIELD

The present disclosure belongs to the technical field of nuclear criticality safety analysis, and specifically relates to a simplified method for overall criticality safety analysis of a pipeline equipment room.

### BACKGROUND

In the treatment of a fissile material in a solution state, pipelines are typically used to deliver a feed solution of the fissile material among various treatment devices. Since facilities for treating the fissile material in the solution state typically involve a complex process flow, the fissile material has a high concentration, a larger number of pipelines are arranged in an equipment room, and a great total amount of feed solution is used, the overall criticality safety of the equipment room containing pipelines becomes a non-negligible key problem. The influence of the pipelines on the criticality safety has to be considered in the overall criticality safety analysis of the equipment room. The pipeline arrangement in the equipment room has the following characteristics: the arrangement is complex and has a large number of pipelines; the pipelines are different in width, and most of the pipelines are narrow; the pipelines are mostly arranged between an equipment and a wall, while a small number of pipelines are arranged between equipment rooms; and the pipelines include pipelines for delivering fissile materials as well as pipelines for delivering non-fissile materials. In the calculation and analysis of overall criticality safety of the equipment room in which the pipeline arrangement is considered, a refined analysis method or a conservative analysis method is typically adopted. The refined analysis method includes establishing a criticality calculation model for each pipeline one by one according to parameters such as start and end positions, a diameter, a wall thickness, a length, a pipeline wall material, feed solution components, or the like of each pipeline. The advantage of this method is that the actual arrangement of pipelines is considered. The disadvantage is that a great amount of pipeline modeling work is involved, and when a Monte Carlo program is used for criticality calculation, sampling of source neutrons should be reasonably distributed to each pipeline or equipment containing a fissile material. The randomness of Monte Carlo sampling cannot be guaranteed, while a large amount of calculation time needs to be consumed, and in addition, the result of the refined analysis is not enveloping, and has to be re-calculated when the pipeline arrangement design is changed. Another common method is to simply gather together the feed solution containing a fissile material into a simple geometry, such as a solution wall. This kind of the conservative method has the advantage of simple modeling, but also the disadvantage that the calculation result is difficult to meet the criticality safety requirement when the total amount of the pipeline feed solution is relatively large. Therefore, there is a need for a method for overall criticality safety analysis of an equipment room considering piping arrangement, which is reasonably conservative and relatively simple in modeling.

According to search of related patents, there are some patents relating to criticality safety analysis methods or criticality safety control methods for related equipments in a spent fuel reprocessing plant, such as "CRITICALITY SAFETY CONTROLLER FOR SPENT FUEL DISSOLVER" (application No.: CN201420325882.4), "CRITICAL SAFETY DESIGN METHOD OF FLUIDIZED BED IN NUCLEAR FUEL POST-TREATMENT" (application No.: CN201910899705.4), "CRITICAL SAFETY CONTROL METHOD FOR DISSOLVER WITH ANNULAR SOLID NEUTRON POISON PARTITION LAYOUT" (application No.: CN201410271524.4), "DISSOLVER SPENT FUEL SHEAR SECTION MODELING METHOD FOR NUCLEAR CRITICAL SAFETY ANALYSIS" (application No.: CN202010994165.0), etc. However, substantially no method for overall criticality safety analysis of an equipment room containing pipelines in a spent fuel reprocessing plant has proposed yet.

### SUMMARY

In order to solve the defects in the existing art, one object of the present disclosure is to provide a simplified method for overall criticality safety analysis of a pipeline equipment room, which can perform overall evaluation of criticality safety of a large number of pipelines and an equipment arranged in the equipment room, thereby improving the calculation and analysis efficiency, while avoiding the problem that a calculation result exceeds a criticality safety receiving criterion due to overly conservative and simple gathering of the pipeline feed solution.

In order to achieve the above object, the present disclosure proposes the following technical solution:

A simplified method for overall criticality safety analysis of a pipeline equipment room, including the following steps S1 to S4.

At step S1, performing, according to a medium in pipelines, screening analysis on all pipelines in an equipment room to be analyzed to obtain pipelines containing a fissile material solution as effective pipelines, and calculating a total feed solution volume in all effective pipelines.

At step S2, establishing a simplified pipeline bundle model, where all the pipelines in the simplified pipeline bundle model are tightly arranged according to a minimum arrangement spacing.

At step S3, searching and calculating, by keeping the total feed solution volume of the pipeline bundle model unchanged, and by changing the number and height of pipelines in the pipeline bundle model, a pipeline bundle size for realizing the maximum reactivity of the simplified pipeline bundle model.

At step S4, tightly contacting the simplified pipeline bundle model having the maximum reactivity next to an equipment having the maximum reactivity in the equipment room in a tight arrangement mode allowing maximum interaction.

Further, in the simplified method for overall criticality safety analysis of a pipeline equipment room described above, the screening analysis on the pipelines in the step S1 specifically includes:
screening out pipelines with a gas feed solution or not containing a fissile material solution to obtain effective pipelines; where for a pipeline that delivers various media, the case of gas in the pipeline is not considered.

Further, in the simplified method for overall criticality safety analysis of a pipeline equipment room described above, in the step S1, uranium and plutonium concentrations in a feed solution state with the maximum reactivity are selected for analysis.

Further, in the simplified method for overall criticality safety analysis of a pipeline equipment room described above, in the step S1, an outer diameter size of the effective pipelines is used to calculate the total feed solution volume of the effective pipelines, enveloping a condition where the pipeline wall is corroded.

Further, in the simplified method for overall criticality safety analysis of a pipeline equipment room described above, in the step S2, all the pipelines in the simplified pipeline bundle model have the same length, and the diameter of the pipelines in the pipeline bundle is the largest diameter of the effective pipelines.

Further, in the simplified method for overall criticality safety analysis of a pipeline equipment room described above, in the step S2, arranging all the pipelines in the simplified pipeline bundle model tightly according to a minimum arrangement spacing specifically includes:
arranging all the effective pipelines in the simplified pipeline bundle model tightly according to a triangular array to form a pipeline bundle shape with a hexagonal outline, where a pipeline spacing is calculated according to an actual minimum arrangement spacing of the thickest pipeline in the screened effective pipelines.

Further, in the simplified method for overall criticality safety analysis of a pipeline equipment room described above, a pipeline wall thickness in the simplified pipeline bundle model takes a set corrosion margin into account.

Further, in the simplified method for overall criticality safety analysis of a pipeline equipment room described above, the step S3 specifically includes:
keeping the total feed solution volume of the pipeline bundle model unchanged, and gradually increasing the number of turns of the hexagonal pipeline bundle, correspondingly gradually reducing a length of the pipeline bundle, and finally searching and calculating to obtain the hexagonal simplified pipeline bundle model with the maximum reactivity.

Further, in the simplified method for overall criticality safety analysis of a pipeline equipment room described above, in the step S4, the hexagonal simplified pipeline bundle model having the maximum reactivity is tightly contacted next to the equipment having the maximum reactivity in the equipment room, which specifically includes:
arranging the hexagonal simplified pipeline bundle model in a vertical direction next to a vertically arranged equipment with the maximum reactivity, and tightly contacting one surface of the hexagonal prism to the equipment; if another equipment with large reactivity is arranged next to the equipment with the maximum reactivity, placing the hexagonal simplified pipeline bundle model between the two equipments, and tightly contacting the hexagonal simplified pipeline bundle model to the equipment with the maximum reactivity; and if the equipment with the maximum reactivity is near a wall of the equipment room, placing the hexagonal simplified pipeline bundle model between the equipment and the wall, and tightly contacting the hexagonal simplified pipeline bundle model to the equipment with the maximum reactivity.

Further, in the simplified method for overall criticality safety analysis of a pipeline equipment room described above, if there are pipelines among the effective pipelines with diameters exceeding a set upper limit and the number of such pipelines is less than a set value, modeling individually according to actual sizes and actual positions of the pipelines, and modeling and performing analysis according to the steps S2 to S4 on the remaining effective pipelines with diameters not exceeding the set upper limit.

With the simplified method for overall criticality safety analysis of a pipeline equipment room according to the present disclosure, the following notable technical effects are obtained:
(1) the tedious work of establishing a large number of pipeline models one by one in the refined modeling can be avoided, thereby simplifying the calculation and analysis process, and improving the calculation and analysis efficiency; and
(2) the influence of considering the pipeline arrangement in an overly conservative manner caused by simply gathering the pipeline feed solution on the criticality safety can be avoided, so as to more reasonably analyze and evaluate the influence of the pipeline arrangement on the criticality safety, and improve the economy and reasonability of the design.

The present disclosure may be applied to nuclear criticality safety design and analysis evaluation of all facilities such as pipelines containing a fissile material solution.

### BRIEF DESCRIPTION OF DRAWINGS

FIG. 1 is a flowchart of a simplified method for overall criticality safety analysis of a pipeline equipment room providing in a specific implementation of the present disclosure;
FIG. 2 is a cross-sectional view of a simplified pipeline bundle model; and
FIG. 3 is a cross-sectional view of an arrangement of an equipment room with a simplified pipeline bundle tightly contacted to an equipment with the maximum reactivity.

### DETAIL DESCRIPTION OF EMBODIMENTS

The present disclosure is further described below with reference to specific embodiments and the accompany drawings.

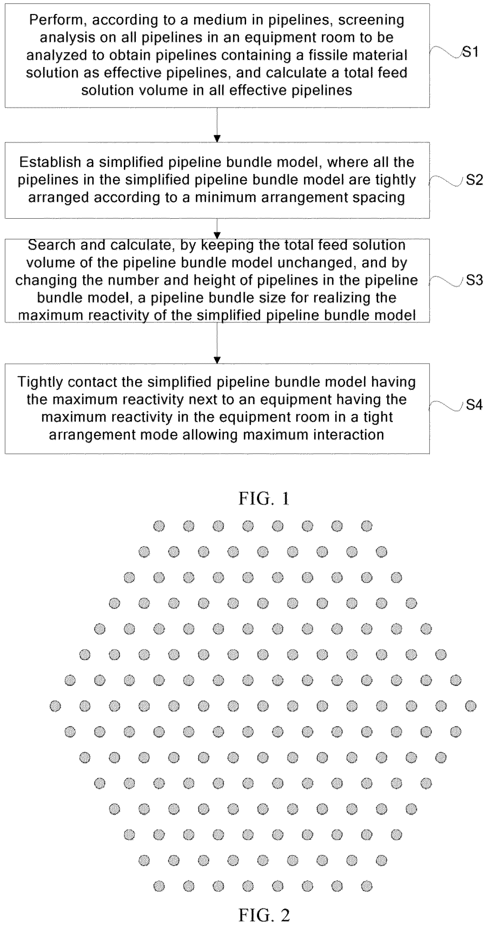

FIG. 1 shows a flowchart of a simplified method for overall criticality safety analysis of a pipeline equipment room according to a specific implementation of the present disclosure. The method includes the following steps S1 to S4.

At step S1, performing, according to a medium in pipelines, screening analysis on all pipelines in an equipment room to be analyzed to obtain pipelines containing a fissile material solution as effective pipelines, and calculating a total feed solution volume in the effective pipelines.

In a preferred implementation, the screening analysis on the pipelines specifically includes: screening out pipelines with a gas feed solution (i.e., a medium in the pipeline) or pipelines not containing a fissile material solution, so as to obtain effective pipelines. For a pipeline that may deliver various media, the case of gas therein is not considered. Uranium and plutonium concentrations in a feed solution state with the maximum reactivity among various solution states are selected in a conservative manner for analysis.

When calculating the total feed solution volume in the effective pipelines, the calculation is performed conservatively according to an outer diameter of the effective pipelines, enveloping a condition where the pipeline wall is corroded.

At step S2, establishing a simplified pipeline bundle model, where all the pipelines in the simplified pipeline bundle model are tightly arranged together according to a set arrangement mode.

In a preferred implementation, all the pipelines in the simplified pipeline bundle model have the same length, and the diameter of the pipelines in the pipeline bundle is the largest diameter of the effective pipelines. All the effective pipelines are conservatively arranged according to the tightest arrangement mode, which means that the pipelines are arranged into a triangular array to form a pipeline bundle shape with a hexagonal outline, where a cross-sectional view of the simplified pipeline bundle model is shown in FIG. 2, and a pipeline spacing is calculated according to an actual minimum arrangement spacing of the widest pipeline in the obtained effective pipelines. The uranium and plutonium concentrations with the maximum reactivity in the effective pipelines are taken into account for the feed solution. The wall thickness of the pipeline conservatively takes into account a certain corrosion margin.

At step S3, searching and calculating, by keeping the total feed solution volume of the pipeline bundle model unchanged, and by changing the number and height in the pipeline bundle models, a pipeline bundle size for realizing the maximum reactivity of the simplified pipeline bundle model.

In this embodiment, the pipeline bundle model refers to the simplified pipeline bundle model obtained in the step S2, and the height refers to a length of the pipeline bundle. In a preferred implementation, the searching and calculating process specifically includes: keeping the total feed solution volume of the pipeline bundle model unchanged, and gradually increasing the number of turns of the hexagonal pipeline bundle (i.e., gradually increasing the number of pipelines in the simplified pipeline bundle model), gradually reducing the length of the pipeline bundle, and finally searching and calculating to obtain the hexagonal simplified pipeline bundle model with the maximum reactivity, i.e., a pipeline bundle size for realizing the maximum reactivity of the simplified pipeline bundle model. This simplified pipeline bundle model with the maximum reactivity takes into account the effect of gathering all pipelines in an enveloping manner, and the pipeline diameter, the feed solution components, and the pipeline spacing are conservative.

At step S4, tightly contacting the searched and calculated simplified pipeline bundle model having the maximum reactivity next to an equipment having the maximum reactivity in the equipment room, so as to take interaction between the pipelines in the equipment room and the equipment in an enveloping manner into account.

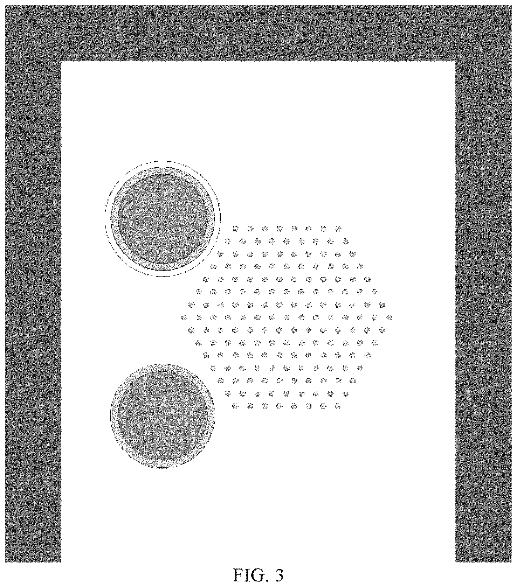

Tightly contacting the simplified pipeline bundle model having the maximum reactivity next to an equipment having the maximum reactivity in the equipment room in a tight arrangement mode allowing maximum interaction, which specifically includes several cases as follows: as shown in FIG. 3, the hexagonal pipeline bundle is arranged in a vertical direction next to a vertically arranged cylindrical equipment with the maximum reactivity, and one surface of the hexagonal prism is tightly contacted to the equipment; if another equipment with large reactivity is arranged next to the equipment with the maximum reactivity, the pipeline bundle model is placed between the two equipments and tightly contacted to the equipment with the maximum reactivity; and if the equipment with the maximum reactivity is near a wall of the equipment room, the pipeline bundle model is placed between the equipment and the wall and tightly contacted to the equipment with the maximum reactivity.

In steps S2 to S4, if there are pipelines with larger diameters (exceeding a set upper limit) and fewer quantities (the number of such pipelines is less than a set value) among the effective pipelines, modeling is performed individually according to actual sizes and actual positions of these pipelines, and the remaining effective pipelines with smaller diameters (not exceeding the set upper limit) are subjected to modeling and analysis according to the steps S2 to S4. For example, the step S 1 is performed to obtain N effective pipelines in an equipment room to be analyzed, diameters of the N effective pipelines are arranged in a descending order, M effective pipelines with the largest diameters are selected from the N effective pipelines, and the M effective pipelines are individually modeled respectively according to actual sizes and actual positions of the pipelines, to obtain an arrangement result of the M effective pipelines, where, for example, M=N*0.5%. The remaining effective pipelines are analyzed according to the steps S2 to S4, to obtain an arrangement result of the remaining effective pipelines. In the case where there are a few pipelines among the effective pipelines having diameters far larger than other pipelines, a greater conservative analysis result degree of the simplified pipeline bundle model will be obtained if the maximum pipeline diameter is used for analysis and calculation. Therefore, the few pipelines with larger diameters may be selected and modeled separately, thereby reasonably reducing the conservative degree of the pipeline arrangement analysis.

To describe the technical solution of the present disclosure more clearly, a certain equipment room is taken as an example here for description.

An equipment room having pipelines containing a fissile material solution is provided with more than 800 pipelines. After sorting and excluding pipelines with gas, an acid solution, pure water, an organic solvent or the like without a fissile material, 450 effective pipelines are left, a total feed solution volume of the effective pipelines is 385.7L. Uranium and plutonium concentrations of a feed solution with the maximum reactivity are selected from feed solutions of the pipelines. The largest diameter of the pipelines includes an outer radius of 2.415 cm, and an inner radius of 2.047cm, and the actual minimum pipeline arrangement spacing is 13cm.

A hexagonal simplified pipeline bundle model is established according to the above parameters. The pipelines in the simplified pipeline bundle model have the same length. The diameter of the pipelines in the pipeline bundle is the largest diameter of the effective pipelines (i.e., an outer radius of 2.415 cm, and an inner radius of 2.047 cm). 0.2 cm of corrosion is taken in account in the pipeline wall. The spacing is taken in account according to the actual minimum arrangement spacing, 13cm, of the widest pipelines. The pipelines are arranged in a triangular array. The total feed solution volume of the pipeline bundle model is kept unchanged, the number of turns of the hexagonal pipeline bundle is gradually increased, the length of the pipeline bundle is gradually reduced, by 1 turn (1 pipeline), 2 turns (7 pipelines), 3 turns (19 pipelines), 4 turns (37 pipelines), etc., and the feed solution volume is distributed to these limited pipelines. According to the searched criticality calculation result, an effective multiplication factor k_{eff} of the pipeline bundle itself is maximum when the number of turns of the pipeline bundle is 8 (169 pipelines), the k_{eff} is 0.4723±0.0005 at 3.5 times of the feed solution concentration, and a cross-sectional view of the pipeline bundle model is as shown in FIG. 2.

In this equipment room, a ring groove equipment has the largest k_{eff}, and another ring groove equipment near that equipment also has a relatively larger k_{eff}. The searched and calculated simplified pipeline bundle having the maximum reactivity is tightly contacted to the equipment with the largest k_{eff} and next to the nearby equipment, where a (partial) cross-sectional view of the pipeline bundle model in the equipment room is as shown in FIG. 3. At 3.5 times of the feed solution concentration, the calculation result k_{eff} for the overall criticality safety of the equipment room taking the pipeline arrangement into account is 0.7550±0.0005, which is slightly larger than the criticality calculation result 0.7407±0.0005 of the equipment room without taking the pipelines into account, but still meets the criticality safety requirement.

The simplified method for overall criticality safety analysis of a pipeline equipment room according to the present disclosure conservatively takes a model in which pipelines containing a fissile material in the equipment room are centrally arranged and in close neighbor of an equipment with the maximum reactivity into account, which can envelop the actual arrangement condition. The method also takes the pipeline diameter and spacing and the like in the actual pipeline arrangement into account, thereby avoiding the condition that the obtained criticality calculation result exceeds the limit due to overly conservative analysis. Compared with the refined process of establishing pipelines one by one, the process of calculation and analysis is much simpler and more convenient, thereby improving the calculation and analysis efficiency, and avoiding the problem that a calculation result exceeds a criticality safety receiving criterion due to overly conservative and simple gathering of a pipeline feed solution.

The above embodiments are merely exemplary illustration of the present disclosure, and the present disclosure may be embodied in other specific manners or forms without departing from the spirit or essence of the present disclosure. The described implementations are, therefore, to be considered in all respects as illustrative and not restrictive. The scope of the present disclosure is to be indicated by the appended claims, and any changes that come within the meaning and range of equivalency of the claims are intended to be embraced therein.

## Claims

1. A simplified method for overall criticality safety analysis of a pipeline equipment room, comprising:
a step (S1) of performing, according to a medium in pipelines, screening analysis on all pipelines in an equipment room to be analyzed to obtain pipelines containing a fissile material solution as effective pipelines, and calculating a total feed solution volume in all effective pipelines;
a step (S2) of establishing a simplified pipeline bundle model, wherein all the pipelines in the simplified pipeline bundle model are tightly arranged according to a minimum arrangement spacing;
a step (S3) of searching and calculating, by keeping the total feed solution volume of the pipeline bundle model unchanged, and by changing the number and height of pipelines in the pipeline bundle model, a pipeline bundle size for realizing the maximum reactivity of the simplified pipeline bundle model; and
a step (S4) of tightly contacting the simplified pipeline bundle model having the maximum reactivity next to an equipment having the maximum reactivity in the equipment room in a tight arrangement mode allowing maximum interaction.

2. The simplified method for overall criticality safety analysis of a pipeline equipment room according to claim 1, **characterized in that** the screening analysis on the pipelines in the step (S1) comprises:
screening out pipelines with a gas feed solution or not containing a fissile material solution to obtain effective pipelines; wherein for a pipeline that delivers various media, the case of gas in the pipeline is not considered.

3. The simplified method for overall criticality safety analysis of a pipeline equipment room according to claim 2, **characterized in that** in the step (S 1), uranium and plutonium concentrations in a feed solution state with the maximum reactivity are selected for analysis.

4. The simplified method for overall criticality safety analysis of a pipeline equipment room according to claim 3, **characterized in that** in the step (S1), an outer diameter of the effective pipelines is used to calculate the total feed solution volume of the effective pipelines, enveloping a condition where the pipeline wall is corroded.

5. The simplified method for overall criticality safety analysis of a pipeline equipment room according to any one of claims 1 to 4, **characterized in that** in the step (S2), all the pipelines in the simplified pipeline bundle model have the same length, and the diameter of the pipelines in the pipeline bundle is the largest diameter of the effective pipelines.

6. The simplified method for overall criticality safety analysis of a pipeline equipment room according to claim 5, **characterized in that** in the step (S2), arranging all the pipelines in the simplified pipeline bundle model tightly according to a minimum arrangement spacing comprises:
arranging all the pipelines in the simplified pipeline bundle model tightly according to a triangular array to form a pipeline bundle shape with a hexagonal outline, wherein a pipeline spacing is calculated according to an actual minimum arrangement spacing of the widest pipeline in the obtained effective pipelines.

7. The simplified method for overall criticality safety analysis of a pipeline equipment room according to claim 6, **characterized in that** a pipeline wall thickness in the simplified pipeline bundle model takes a set corrosion margin into account.

8. The simplified method for overall criticality safety analysis of a pipeline equipment room according to claim 7, **characterized in that** the step (S3) comprises:
keeping the total feed solution volume of the pipeline bundle model unchanged, gradually increasing the number of turns of the hexagonal pipeline bundle, correspondingly gradually reducing a length of the pipeline bundle, and finally searching and calculating to obtain the hexagonal simplified pipeline bundle model with the maximum reactivity.

9. The simplified method for overall criticality safety analysis of a pipeline equipment room according to claim 8, **characterized in that** in the step (S4), the hexagonal simplified pipeline bundle model having the maximum reactivity is tightly contacted next to the equipment having the maximum reactivity in the equipment room, which comprises:
arranging the hexagonal simplified pipeline bundle model in a vertical direction next to a vertically arranged equipment with the maximum reactivity, and tightly contacting one surface of the hexagonal prism to the equipment; if another equipment with large reactivity is arranged next to the equipment with the maximum reactivity, arranging the hexagonal simplified pipeline bundle model between the two equipments, and tightly contacting the hexagonal simplified pipeline bundle model to the equipment with the maximum reactivity; and if the equipment with the maximum reactivity is near a wall of the equipment room, placing the hexagonal simplified pipeline bundle model between the equipment and the wall, and tightly contacting the hexagonal simplified pipeline bundle model to the equipment with the maximum reactivity.

10. The simplified method for overall criticality safety analysis of a pipeline equipment room according to any one of claims 6 to 9, **characterized in that** if there are pipelines among the effective pipelines with diameters exceeding a set upper limit and the number of such pipelines is less than a set value, modeling individually according to actual sizes and actual positions of the pipelines, and modeling and performing analysis according to the steps (S2) to (S4) on the remaining effective pipelines with diameters not exceeding the set upper limit.
